# FASCICULE DE BREVET EUROPEEN

(11) **EP 2 448 235 B1**
(45) Date de publication et mention de la délivrance du brevet: **22.08.2018**
(21) Numéro de dépôt: 11187421.0
(22) Date de dépôt: 02.11.2011
(51) Int. Cl.: H04M 15/00, H04M 17/00, H04W 4/24, H04M 15/30

(54) **ENTITÉ ÉLECTRONIQUE GÉRANT UN CRÉDIT D'UTILISATION D'UNE RESSOURCE DONT L'ACCÈS EST CONTRÔLÉ PAR UN DISPOSITIF DE CONTRÔLE**
ELEKTRONISCHE EINHEIT, DIE EINEN NUTZUNGSKREDIT EINER RESSOURCE VERWALTET, DEREN ZUGRIFF DURCH EINE KONTROLLVORRICHTUNG KONTROLLIERT WIRD
ELECTRONIC ENTITY MANAGING A CREDIT FOR USING A RESOURCE IN WHICH ACCESS TO SAME IS CONTROLLED BY A CONTROL DEVICE

(30) Priorité: 02.11.2010 FR 1058998
(43) Date de publication de la demande: 02.05.2012
(73) Titulaire: IDEMIA France, 92700 Colombes (FR)
(72) Inventeur: Condemine, Olivier, 92000 Nanterre (FR); Stranges, Lorenzo, 92000 Nanterre (FR)
(74) Mandataire: Delumeau, François Guy

(56) Documents cités:
- EP-A2- 1 083 767
- WO-A1-99/04548
- WO-A1-2005/041605
- WO-A2-95/28062

## Description

### Arrière-plan de l'invention

La présente invention se situe dans le domaine du contrôle d'accès à une ressource par une entité électronique.

L'invention s'applique de façon privilégiée, mais non limitative, pour contrôler l'accès aux ressources d'un réseau de téléphonie mobile par un terminal incorporant une carte à microcircuit permettant la souscription à ce réseau, par exemple une carte USIM ou une carte SIM conforme à la norme ISO7816.

On rappelle en premier lieu la procédure d'authentification définie par la norme GSM (ETSI 102.221).

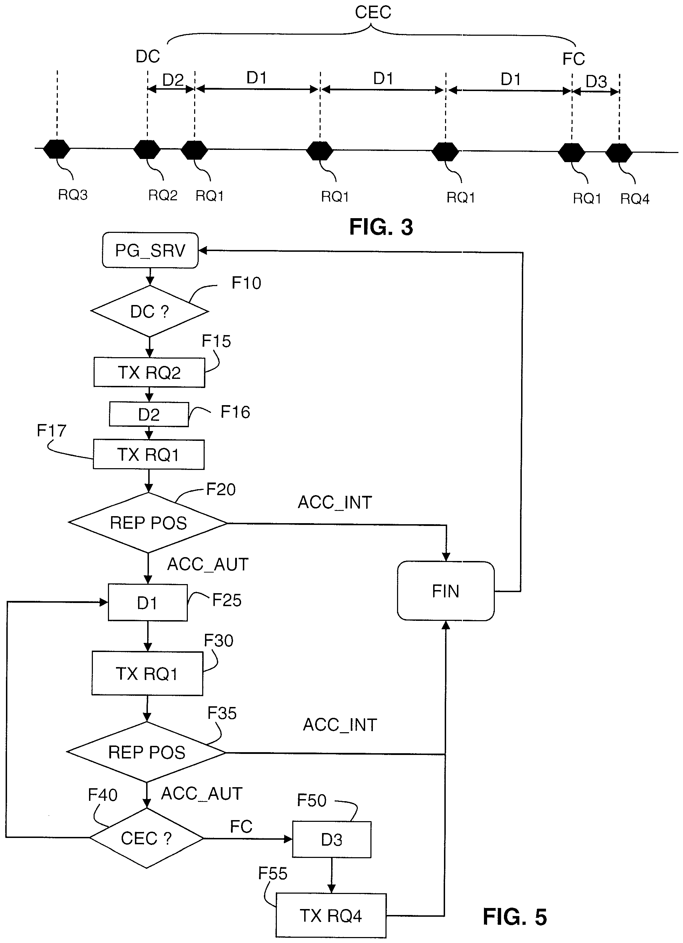

Selon cette norme, la procédure d'authentification, par un serveur du réseau, d'une carte à microcircuit incorporée dans un terminal comporte les étapes suivantes :
- envoi, par le serveur, d'une requête d'authentification au terminal (référencée RQ3 à la figure 3) ;
- sur réception de cette requête d'authentification, le terminal envoie une commande Run GSM ALGORITHM (définie par la norme ETSI 102.221) à la carte à microcircuit afin de lui transmettre la requête d'authentification;
- calcul, par la carte à microcircuit, d'une réponse à cette requête à partir de moyens cryptographiques, notamment d'une clef secrète ;
- transmission de cette réponse par le terminal au serveur ;
- vérification de la réponse par le serveur en utilisant ses propres moyens cryptographiques, dont une clef correspondant à celle utilisée par la carte à microcircuit ; et
- en cas de vérification positive, autorisation, par le serveur, de l'utilisation de ressources du réseau par le terminal.

Un exemple d'art antérieur similaire est décrit dans le document WO95/28062.

Le plus souvent, la facturation des communications est gérée par les serveurs de l'opérateur, notamment pour des raisons de sécurité.

L'invention vise une solution alternative permettant de déporter la gestion de la facturation sur les terminaux eux-mêmes.

### Objet et résumé de l'invention

Plus précisément, et selon un premier aspect, l'invention concerne une entité électronique comportant :
- une mémoire sécurisée comportant un module pour gérer un crédit d'utilisation d'une ressource ;
- des moyens pour recevoir au moins une requête d'un type déterminé émise par un dispositif de contrôle ;
- des moyens pour déterminer, à partir d'au moins une de ces requêtes, un état de la communication entre l'entité électronique et le dispositif de contrôle ;
- des moyens sécurisés aptes à générer une réponse positive à une des dites requêtes, lorsque l'état de la communication est un état déterminé, uniquement si le crédit est suffisant ;
- des moyens de réponse aptes à envoyer cette réponse positive au dispositif de contrôle.

Corrélativement, l'invention concerne aussi un procédé d'accès à une ressource pouvant être mis en oeuvre par une entité électronique comportant une mémoire sécurisée comportant un module pour gérer un crédit d'utilisation de ladite ressource, ce procédé comportant :
- une étape de réception d'au moins une requête d'un type déterminé émise par un dispositif de contrôle ;
- une étape de détermination, à partir d'au moins une de ces requêtes, un état de la communication entre l'entité électronique et le dispositif de contrôle;
- une étape de génération d'une réponse positive, à une desdites requêtes, par des moyens sécurisés de l'entité électronique, lorsque l'état de la communication est un état déterminé, uniquement si le crédit est suffisant ; et
- une étape d'envoi de cette réponse au dispositif de contrôle précité.

L'invention vise aussi un serveur apte à coopérer avec l'entité électronique telle que mentionné ci-dessus.

Selon un deuxième aspect l'invention concerne un dispositif de contrôle comportant des moyens pour autoriser ou interdire l'accès à une ressource par une entité électronique ou par un dispositif tiers associé à cette entité électronique, ce dispositif de contrôle comportant :
- des moyens pour déterminer un état de la communication entre le dispositif de contrôle et l'entité électronique;
- des moyens d'envoi aptes à envoyer au moins une requête d'un type déterminé à cette entité électronique, cette ou ce(s) requêtes étant représentatives de l'état de la communication ; et
- des moyens de contrôle aptes à autoriser l'accès à la ressource par l'entité électronique ou par le dispositif tiers uniquement en cas de réception d'une réponse positive à cette requête.

Corrélativement, l'invention concerne aussi un procédé pouvant être mis en oeuvre par un dispositif de contrôle pour contrôler l'accès à une ressource par une entité électronique ou par un dispositif tiers associé à cette entité électronique, ce procédé comportant :
- une étape pour déterminer un état de la communication entre le dispositif de contrôle et l'entité électronique;
- l'envoi d'au moins une requête d'un type déterminé à cette entité électronique, cette ou ces requêtes étant représentatives de l'état de la communication ; et
- une étape pour autoriser l'accès à la ressource par l'entité électronique ou par le dispositif tiers uniquement en cas de réception d'une réponse positive à la requête.

Ainsi, et d'une façon générale, l'invention propose de gérer les crédits d'utilisation de la ressource dans une mémoire sécurisée de l'entité électronique, et de renforcer la sécurité en confiant le contrôle d'accès auxdites ressources à un dispositif de contrôle, l'entité électronique étant apte à vérifier l'état de la communication entre ces entités avant de répondre positivement à une requête sur la base des requêtes d'un certain type reçues du dispositif de contrôle.

Le dispositif de contrôle gérant l'accès à la ressource interdit tout accès à la ressource dès lors qu'il ne reçoit pas une réponse positive de l'entité électronique, une réponse positive étant envoyée par l'entité électronique, lorsque la communication entre l'entité électronique et le dispositif de contrôle se trouve dans un état déterminé, uniquement si le crédit d'utilisation de la ressource est suffisant.

Dans un mode préféré de réalisation, les requêtes de type déterminé sont les requêtes utilisées par le dispositif de contrôle pour interdire l'accès aux ressources par l'entité électronique ou par le dispositif tiers associé à cette entité électronique.

Il peut s'agir en particulier de requêtes d'authentification.

Dans un mode particulier de réalisation, l'entité électronique comporte des moyens pour diminuer le crédit de communication, sur réception d'une requête, lorsqu'elle détecte que la communication avec le dispositif de contrôle est en cours.

L'entité électronique selon l'invention peut être utilisée pour gérer n'importe quel type de ressources dont l'accès est contrôlé par un dispositif de contrôle.

Par exemple, l'invention peut être utilisée pour contrôler l'accès à une plateforme de jeu (entité électronique au sens de l'invention), cette plateforme communiquant avec un verrou électronique, par exemple une clef USB (dispositif de contrôle au sens de l'invention). Dans ce mode de réalisation, le crédit d'utilisation peut permettre de limiter l'accès à certains niveaux du jeu, permettre le jeu pendant une durée limitée ou permettre un certain nombre de parties de jeu.

Dans une variante particulière de réalisation, l'entité électronique est constituée par une carte à microcircuit permettant à un terminal d'accéder à des ressources d'un réseau de télécommunications pour établir une communication dans le réseau, lorsque cette carte répond positivement aux requêtes émises par un serveur du réseau gérant l'accès à ces ressources.

Les ressources du réseau de télécommunication sont par exemple les ressources réservées par le réseau pour établir une communication vocale, le crédit d'utilisation de ces ressources exprimant une durée de communication.

Ces ressources peuvent également être les ressources réservées par ledit réseau pour transporter un flux de données utilisateur, ledit crédit d'utilisation exprimant une durée ou un volume de données utilisateur. Ces données utilisateur peuvent notamment être des requêtes et des réponses HTTP par exemple.

Dans un mode particulier de réalisation :
- le dispositif de contrôle est un serveur gérant l'accès aux ressources du réseau de télécommunications ;
- les moyens d'envoi sont aptes à envoyer régulièrement, pendant toute la durée d'une communication, une requête d'authentification à une carte à microcircuit permettant à un terminal d'accéder aux ressources du réseau pour cette communication ; et
- les moyens de contrôle sont aptes à interdire l'accès aux ressources par le terminal en cas d'échec d'une authentification.

Dans un mode préféré de cette variante de réalisation, la requête émise par le serveur gérant l'accès aux ressources du réseau est une requête d'authentification, et l'entité électronique comporte des moyens cryptographiques aptes à générer une réponse d'authentification constituant la réponse positive, par exemple en utilisant une première clef cryptographique et l'algorithme « Run GSM ALGORITHM ».

Ce mode de réalisation est particulièrement avantageux, car le mécanisme requête/réponse repose sur le mécanisme d'authentification sécurisé de la procédure GSM.

Dans un autre mode de réalisation de cette variante les moyens sécurisés sont aptes à générer la réponse positive sur réception d'une requête constituée par un message court sécurisé émis par le serveur.

En effet, plusieurs mécanismes de requête/réponse peuvent être envisagés entre le serveur et l'entité électronique, dont l'envoi de la requête par SMS.

Dans ce mode de réalisation différents mécanismes peuvent être utilisés pour envoyer la réponse positive au serveur ; la réponse peut notamment être envoyée par SMS également ou selon un mécanisme de commande / réponse HTTP.

Dans un mode particulier de réalisation, le serveur n'autorise l'accès à la ressource que lorsqu'il reçoit une réponse positive dans une durée inférieure à une valeur déterminée, comptée à partir de l'émission de la dernière dite requête.

Dans un mode particulier de réalisation de l'invention, le module de gestion du crédit de communication diminue le crédit de communication dès réception de la requête de type déterminé.

Dans un mode de réalisation particulier, l'entité électronique selon l'invention gère un compteur d'utilisation de la ressource, en plus du crédit d'utilisation de la ressource.

Plus particulièrement, dans un mode de réalisation particulier, ce compteur est un compte à rebours qui mesure la durée entre la réception de deux requêtes successives. Ce compteur peut être réinitialisé sur réception d'une requête avec une valeur supérieure à la durée attendue jusqu'à la réception de la prochaine requête.

Le crédit peut être communiqué à l'entité électronique par un autre dispositif.

Lorsque l'invention est utilisée dans le contexte d'un réseau de télécommunications, ce crédit peut correspondre à un montant prépayé par l'utilisateur pour accéder au réseau.

Dans un scénario possible de mise en oeuvre de l'invention, particulièrement adapté à la gestion de la facturation dans un réseau de télécommunications, le serveur gérant l'accès aux ressources envoie régulièrement des requêtes à l'entité électronique, le module précité étant apte, sur réception d'une requête, à diminuer le crédit précité d'une valeur égale à l'intervalle de temps entre l'émission de deux requêtes consécutives par le serveur.

Ainsi, dans le cas d'une carte prépayée, le serveur ou dispositif de contrôle envoie régulièrement, selon un intervalle de temps déterminé, par exemple toutes les minutes, une requête d'authentification à la carte entre le début et la fin de la communication, la carte étant apte à déterminer l'état de la communication sur la base de ces requêtes et à y répondre positivement si le crédit d'accès aux ressources restant est suffisant, le réseau interdisant l'accès à ses ressources lorsqu'il ne reçoit pas de réponse positive de la carte.

Conformément à l'invention, les requêtes envoyées par le dispositif de contrôle peuvent être utilisées pour véhiculer une autre information.

Par exemple, les requêtes émises par le dispositif de contrôle peuvent comporter un code représentatif d'un état de la communication entre le dispositif de contrôle et l'entité électronique, ce code étant interprétable par l'entité électronique.

Par exemple, ce code peut permettre d'indiquer à la carte à microcircuit le début ou la fin d'une communication, ceci permettant à la carte de mettre à jour son crédit de communication.

En variante, la séquence de requêtes envoyées par le serveur selon l'invention peut permettre à l'entité électronique de détecter l'état de la communication.

Plus particulièrement, dans un mode de réalisation, l'entité électronique comporte des moyens pour détecter l'état de la communication en analysant la durée entre la réception de deux requêtes successives ou plus.

Par exemple, l'entité électronique peut comporter des moyens pour détecter le début ou la fin de la communication sur réception de deux requêtes consécutives espacées d'une durée différente d'un intervalle de temps déterminé correspondant à la durée entre deux requêtes consécutives lorsqu'une communication est en cours.

Dans un mode particulier de réalisations, les moyens sécurisés de l'entité électronique sont aptes à générer une réponse négative lorsque le compteur est épuisé, cette réponse négative étant envoyée au serveur par les moyens de réponse.

Par exemple, on peut utiliser les moyens cryptographiques précités pour générer la réponse négative en utilisant une deuxième clef cryptographique.

En variante, l'entité électronique ne répond pas à la requête lorsque le compteur est épuisé.

On notera que l'absence de réponse à ladite requête constitue un cas particulier d'échec de l'authentification.

Préférentiellement les moyens d'envoi précités sont aptes à envoyer la requête d'authentification régulièrement selon un intervalle de temps déterminé entre le début et la fin de la communication.

Dans un mode particulier de réalisation les moyens d'envoi sont aptes à envoyer une requête d'authentification juste après le début de la communication, et/ou juste après la fin de la communication.

Ce mode de réalisation permet à l'entité électronique, par analyse de la séquence des requêtes d'authentification reçues du serveur, de connaître l'état de la communication.

L'invention vise aussi un système comportant un serveur et une entité électronique tels que mentionnés ci-dessus.

Dans un mode particulier de réalisation, les différentes étapes du procédé d'accès à une ressource et/ou du procédé de contrôle d'accès à une ressource sont déterminées par des instructions de programmes d'ordinateurs.

En conséquence, l'invention vise aussi un programme d'ordinateur sur un support d'informations, ce programme étant susceptible d'être mis en oeuvre par un ordinateur, ce programme comportant des instructions adaptées à la mise en oeuvre des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de l'invention ressortiront de la description faite ci-dessous en référence aux dessins annexés qui en illustrent un exemple de réalisation dépourvu de tout caractère limitatif.

Sur ces figures :
- la figure 1 représente une entité électronique conforme à un mode particulier de réalisation de l'invention ;
- la figure 2 représente un serveur conforme à un mode particulier de réalisation de l'invention ;
- la figure 3 représente une séquence d'envoi de requête conforme à un mode particulier de réalisation de l'invention ;
- la figure 4 représente, sous forme d'organigramme, les principales étapes d'un procédé d'accès à une ressource conforme à un mode particulier de réalisation de l'invention ; et
- la figure 5 représente, sous forme d'organigramme, les principales étapes d'un procédé de contrôle d'accès à une ressource conforme à mode particulier de réalisation de l'invention.

### Description détaillée de l'invention

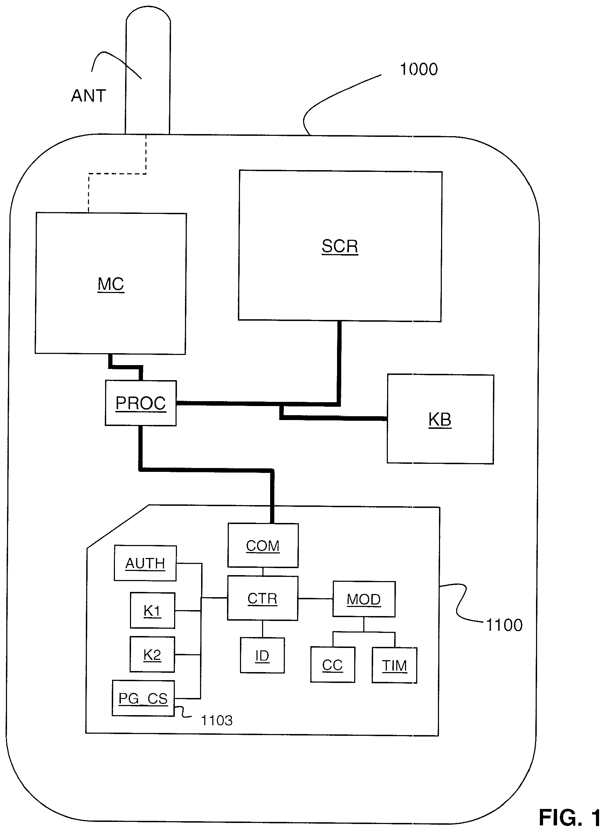

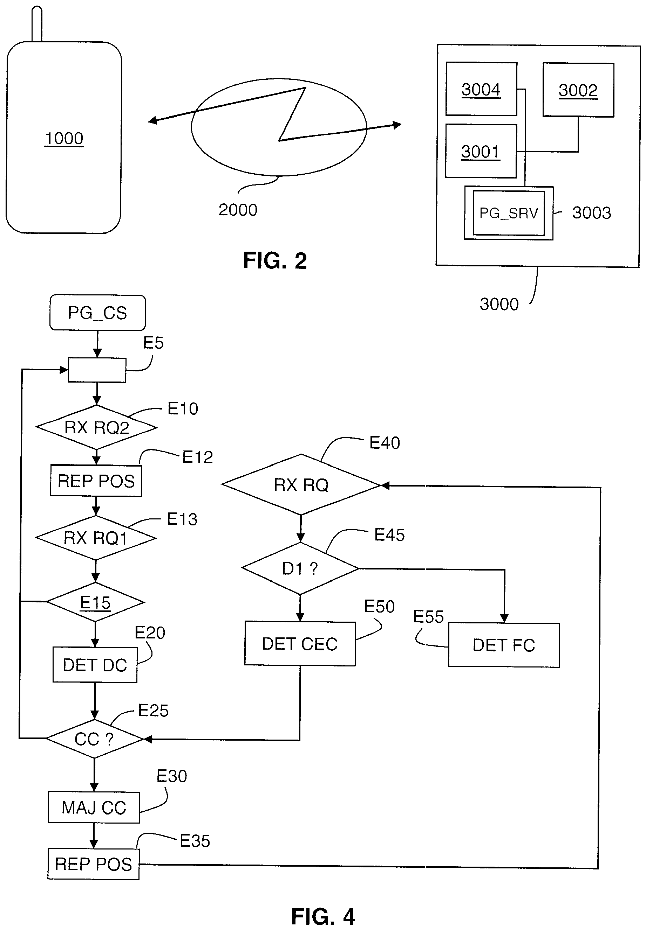

En référence aux **figures 1** **et** **2**, on a représenté un terminal 1000 apte à communiquer, via un réseau de télécommunications 2000 avec un serveur 3000 durant l'accès aux ressources de ce réseau. Le serveur 3000 constitue un dispositif de contrôle au sens de l'invention, associé au terminal 1000.

Dans l'exemple décrit ici, ce réseau de télécommunications 2000 est un réseau conforme à la norme GSM ou un réseau de troisième génération (3G). Dans un cas particulier, le réseau de télécommunications 2000 comporte un réseau Internet.

Le terminal 1000 est dans cet exemple, un téléphone mobile comportant, comme de façon connue, un processeur PROC, des moyens de communications MC sur le réseau 2000 relié à une antenne ANT, un écran SCR, un clavier KB et une carte à microcircuit 1100 conforme à la norme ISO 7816.

La carte à microcircuit 1100 constitue une entité électronique au sens de l'invention. Elle comporte, dans cet exemple, un contrôleur CTR, des moyens COM de communication avec le processeur PROC du terminal 1000, une mémoire morte de type ROM 1103, un identifiant ID de type IMSI selon la norme GSM ou 3G et un module MOD de gestion d'un crédit de communication CC.

Dans un mode particulier de réalisation, il est possible de recharger le crédit de communication CC sur réception d'un message court SMS émis par l'opérateur, suite à un achat réalisé par l'usager par exemple. La fonction connue de l'homme du métier sous le nom « Over the air », utilisant des SMS sécurisés et définie par la norme 03.48 peut notamment être utilisée.

La mémoire morte 1103 constitue un support d'enregistrement conforme à l'invention ; elle mémorise un programme d'ordinateur PG_CS conforme à l'invention apte à mettre en oeuvre un procédé d'accès aux ressources du réseau de télécommunications 2000 et dont les principales étapes sont représentées sous forme d'organigramme à la figure 4.

L'entité électronique 1100 comporte également des moyens cryptographiques AUTH aptes à mettre en oeuvre un algorithme d'authentification auprès du serveur 3000, par exemple conforme à la norme A3/A8 de la norme GSM.

Ces moyens d'authentification utilisent, dans cet exemple, une première clef cryptographique K1 mémorisée dans la carte à microcircuit 1100, pour mettre en oeuvre le procédé d'authentification rappelé au préambule de la présente demande.

Dans cet exemple de réalisation, l'entité électronique 1100 comporte un compteur TIM d'utilisation des ressources du réseau téléphonique.

Dans l'exemple décrit ici, ce compteur est un compte à rebours réinitialisé, par les moyens de contrôle CTR, à chaque réception d'une requête d'authentification émise par le serveur 3000.

Conformément à l'invention, l'entité électronique 1100 est apte à envoyer une réponse positive à toute requête d'authentification reçue du serveur 3000, lorsque la communication entre le serveur 3000 et l'entité électronique 1100 est dans un état déterminé, uniquement si le crédit de communication est suffisant.

Dans l'exemple de réalisation décrit ici, cette réponse positive est envoyée :
- lorsque le crédit de communication est positif en début d'appel ; et/ou
- lorsque le crédit de communication est suffisant pour utiliser les ressources du réseau pendant une durée déterminée en cours d'appel, cette durée pouvant avantageusement être choisie comme étant la durée séparant normalement deux requêtes d'authentification successives émises par le serveur 3000.

Dans l'exemple de réalisation décrit ici le serveur 3000 a l'architecture matérielle d'un ordinateur.

Il comporte un processeur 3001, une mémoire vive de type RAM 3002, une mémoire morte de type ROM 3003 et des moyens de communication 3004 sur le réseau de type communication 2000.

La mémoire morte 3003 constitue un support d'enregistrement conforme à l'invention ; elle mémorise un programme d'ordinateur PG_SRV conforme à l'invention apte à mettre en oeuvre un procédé de contrôle d'accès aux ressources du réseau de télécommunications 2000 conforme à l'invention, et dont les principales étapes sont représentées sous forme d'organigramme à la figure 5.

La **figure 3****,** représente, sous forme de chronogramme, une séquence de requêtes d'authentification émises par le serveur 3000, l'axe horizontal représentant l'axe des temps.

En premier lieu, le serveur d'authentification émet une requête d'authentification RQ3, comme mentionné au préambule de la présente demande, lors de la procédure d'authentification classique du terminal 1000, consécutivement à sa mise sous tension.

Dans l'exemple de réalisation décrit ici, le serveur 3000 envoie une première requête d'authentification RQ2 lorsqu'il détecte le début d'une communication DC avec le terminal 1000 puis, après une durée D2, une série de requêtes d'authentification RQ1 espacées d'un intervalle de temps D1 pendant toute la durée de la communication CEC, puis une requête d'authentification RQ4 après une durée D3 comptée à partir de la fin de la communication FC.

Nous allons maintenant décrire, en référence aux **figures 4** **et** **5****,** les procédés mis en oeuvre par l'entité électronique 1100 et par le serveur 3000 respectivement.

Nous supposerons tout d'abord, que l'entité électronique 1100 reste, dans une étape générale E5, en attente d'un appel sortant. L'invention peut aussi être utilisée dans le cas d'un appel entrant, comme décrit ultérieurement en référence à la troisième variante.

Lorsqu'une communication est établie, le serveur 3000 détecte, au cours d'une étape F10, le début de la communication DC puis, émet, au cours d'une étape F15, une requête d'authentification RQ2 à destination du terminal 1000.

Cette requête RQ2 est reçue par l'entité électronique 1100 par la mise en oeuvre de la fonction Run GSM ALGORITHM commentée précédemment au cours d'une étape E10.

L'entité électronique 1100 répond positivement à cette requête RQ2 au cours d'une étape E12. Elle reçoit ensuite, au cours d'une étape E13, une requête d'authentification RQ1, envoyée par le serveur 3000, au cours d'une étape F17, si la réponse à la requête RQ2 était valide. Dans l'exemple de réalisation décrit ici, la requête RQ2 est envoyée par le serveur 3000 après avoir attendu (étape F16) une durée D2 comptée à partir de l'émission de la requête RQ1.

D'une façon générale, dans le mode de réalisation décrit ici, l'entité électronique 1100 mesure, au cours d'une étape E15, grâce au compteur TIM, l'intervalle de temps entre la réception de deux requêtes d'authentification successives, pour en déduire l'état de la communication (HC : hors communication, DC : début de la communication, CEC : communication en cours, FC : fin de la communication). L'état de la communication est mémorisé dans une mémoire volatile non représentée de l'entité électronique 1100.

Ainsi, au cours d'une étape E20, l'entité électronique 1100 détecte le début de la communication DC, sur détection d'une séquence d'au moins deux requêtes, ces requêtes étant espacées entre elles selon des durées prédéterminées. Les séquences SQ1, SQ2 ci-dessous peuvent notamment être utilisées :
Séquence SQ1 : réception de deux requêtes successives espacées d'une durée prédéterminée D2 (en l'occurrence RQ2, RQ1) ; la durée DSQ de cette séquence est égale à D2.
Séquence SQ2 : réception de trois requêtes successives, la deuxième requête étant espacée de la première requête d'une durée D2 prédéterminée, la troisième requête étant espacée de la deuxième requête d'une durée D1 (en l'occurrence RQ2, RQ1, RQ1) ; la durée DSQ de cette séquence est égale à D2 + D1.

Dans le mode de réalisation décrit ici, et en référence à la figure 3, l'entité électronique 1100 met à jour l'état de la communication sur réception de chaque requête d'authentification reçue du serveur :
- si état = HC et début de communication détecté :
   alors, état = DC ;
- si état = DC ou CEC :
   - si la durée D1 sépare deux requêtes :
      alors, état = CEC ;
   - si une durée supérieure à D1 sépare deux requêtes :
      alors, état = HC ;
- si une durée D3 inférieure à D1 sépare deux requêtes :
   alors, état = HC.

Si le début de la communication n'est pas détecté, le procédé retourne à l'étape E5 d'attente d'un d'appel.

Au cours d'une étape E25 l'entité électronique 1100 vérifie si le crédit de communication CC est suffisant pour effectuer ou poursuivre la communication. Si ce n'est pas le cas, le procédé retourne à l'étape E5 d'attente d'un d'appel. En variante, l'entité électronique 1100 peut répondre négativement à la requête d'authentification RQ1.

En tout état de cause, conformément à l'invention, si ce compteur est épuisé, l'entité électronique 1100 ne répond pas positivement à la requête d'authentification RQ1 reçue à l'étape E13.

Dans le mode de réalisation décrit ici, l'entité électronique ne met le compteur CC à jour que si l'état de la communication est DC ou CEC (début de communication détecté, ou communication en cours).

Si le crédit de communication est suffisant, l'entité électronique 1100 met à jour son crédit de communication au cours d'une étape E30, en diminuant ce crédit d'une durée correspondant à la durée non débitée jusqu'à la réception de la prochaine requête RQ1 (durée de la séquence DSQ + D1). Ensuite, pendant le cours de la communication, le crédit de communication est diminué de la durée D1 correspondant à l'intervalle de temps entre deux requêtes RQ1 successives susceptibles d'être émises par le serveur 3000.

Dans le mode de réalisation décrit ici, l'entité électronique 1100, ayant déterminé que le début de la communication (état DC) répond positivement (étape E35) à la requête RQ1, dès lors que le crédit de communication CC est positif.

La réponse de l'entité électronique 1100 est reçue par le serveur 3000 au cours d'une étape F20.

En cas de réponse positive, le serveur 3000 autorise l'accès aux ressources du réseau par le terminal 1000 (branche ACC_AUT) puis émet régulièrement, tant que la communication est en cours (résultat d'un test F40 positif) toutes les D1 secondes (étapes F25, F30), une requête d'authentification RQ1 à destination de l'entité 1100.

En cas de réponse négative ou d'absence de réponse, le serveur 3000 interdit l'accès aux ressources du réseau (branche ACC_INT) par le terminal 1000.

Les requêtes RQ1 envoyées par le serveur 3000 sont reçues par l'entité électronique 1100 au cours d'une étape E40.

Au cours d'une étape E45, l'entité électronique 1100 vérifie que la durée D1 (à une tolérance près) sépare deux réceptions successives de ces requêtes.

Si tel est le cas, elle considère, au cours d'une étape E50, que la communication est en cours (état CEC).

Puis, le procédé d'accès aux ressources du réseau 2000 se poursuit, par le test E25 déjà décrit au cours duquel l'entité électronique 1100 vérifie si le crédit de communication CC est suffisant pour poursuivre la communication, c'est à dire, dans cet exemple, supérieur à la durée D1 séparant normalement deux requêtes RQ1 successives émises par le serveur

Si tel est le cas ce crédit de communication est mis à jour (étape E30) et l'entité électronique 1100 répond positivement au serveur 3000 (étape E35).

La réponse positive est générée par les moyens AUTH cryptographiques du serveur 1100, ceux-ci étant aptes à générer une réponse d'authentification, en utilisant la clef cryptographique K1 et l'algorithme Run GSM ALGORITHM comme de façon connue.

Lorsque le serveur 3000 détecte la fin de la communication FC (résultat du test F40 négatif) ce serveur attend une durée D3 (étape F50) puis envoie une requête d'authentification RQ4 à l'entité 1100 au cours d'une étape F55.

Sur réception de cette requête RQ4 (étape E40), l'entité électronique 1100 a vu s'écouler une durée D3 inférieure à la durée D1 à l'étape E45 et détermine (étape E55) la fin de la communication FC. Préférentiellement, l'entité électronique répond positivement à la requête RQ4, mais elle peut aussi y répondre négativement ou ne pas répondre. Le programme retourne ensuite à l'étape E5.

Dans cet exemple de réalisation, à réception de chacune des requêtes d'authentification, l'entité électronique 1100 répond positivement, en début de communication (état DC) ou lorsque la communication est en cours (état CEC), uniquement lorsque le crédit de communication CC est suffisant.

L'entité électronique 1100 peut choisir de répondre par une réponse négative lorsque le crédit de communication a expiré. Cette réponse pourrait être constituée par un nombre aléatoire. Ce nombre aléatoire doit bien entendu être différent de la valeur d'une réponse positive à la requête d'authentification ; il est donc nécessaire que l'entité électronique 1100 vérifie que ce nombre aléatoire diffère du résultat de l'algorithme Run GSM appliqué à la requête d'authentification en utilisant la clef secrète K1.

En variante, l'entité électronique 1100 pourrait générer une réponse d'authentification en utilisant la deuxième clef cryptographique K2 différente de la clef K1.

Sur réception de cette réponse d'authentification, le serveur 3000 détecterait un échec d'authentification et refuserait l'accès aux ressources du réseau au terminal 1000.

Dans l'exemple de réalisation décrit ici, l'entité électronique 1100 réinitialise le compteur TIM (remise à zéro) sur réception d'une requête d'authentification. En variante, cette remise zéro peut se faire lorsque le compteur TIM arrive à son maximum, l'entité électronique mémorisant le nombre de remises à zéro pour mesurer le temps total écoulé.

D'autres moyens à la portée de l'homme du métier peuvent être utilisés pour mesurer le temps entre deux requêtes successives. On peut par exemple utiliser une horloge, préférentiellement interne à l'entité électronique, pour mesurer le délai écoulé entre deux telles requêtes.

Dans cet exemple, la durée D1 est fixée entre 30s et trois minutes, préférentiellement une minute, et les durées D2 et D3 inférieures à trente secondes, préférentiellement inférieures à quinze secondes par exemple respectivement à 2 secondes et 3 secondes.

Dans la description qui vient d'être faite, le serveur 3000 utilise les réponses aux requêtes RQi pour autoriser ou interdire l'accès au réseau par le terminal 1000, celui-ci incorporant l'entité électronique 1100. En variante, le terminal 1000 et l'entité électronique 1100 peuvent être identiques.

### Autres variantes de réalisation

### Première variante :

Dans l'exemple de réalisation décrit ici, l'entité électronique 1100 détecte l'état de la communication en analysant la durée entre la réception d'au moins deux requêtes successives :
- durée D2 inférieure à D1 (début de communication DC) ;
- durée sensiblement égale à D1 : communication en cours CEC ;
- absence de réception de requête pendant une durée importante (perte de communication avec le réseau 2000) ; et
- durée égale à D3 : fin de la communication FC.

En variante, les requêtes d'authentification RQ1, RQ2, RQ3 et RQ4 pourraient contenir un champ représentatif de l'état de la communication.

Par exemple, la requête d'authentification peut contenir un nombre aléatoire de taille fixe, certains bits de ce nombre pouvant être utilisés pour communiquer l'état de la communication à la carte à microcircuit.

On pourrait utiliser le codage suivant :
- bit 00 : authentification normale (requête RQ3) ;
- bit 01 : début d'appel (requête RQ2) ;
- bit 10 : fin d'appel (requête RQ4) ; et
- bit 11 : appel en cours (requête RQ1).

Ces bits étant utilisés par l'entité électronique 1100 pour former la réponse à la requête d'authentification, toute attaque de type « man in the middle » serait détectée par le serveur. Par exemple, la réponse peut comporter le résultat de la transformation du nombre aléatoire par une fonction cryptographique à partir de la première clef cryptographique K1 mémorisée dans l'entité électronique.

En effet, à titre d'exemple, si une personne mal intentionnée venait à modifier les bits du nombre aléatoire en 01 pour faire croire à un début d'appel, ou en 10 pour faire croire à une fin d'appel, du fait que ces bits sont utilisés pour générer la réponse à la requête d'authentification, le serveur 3000 détecterait la fraude et refuserait l'accès aux ressources du réseau 2000 par le terminal 1000.

### Deuxième variante :

Dans l'exemple décrit précédemment, les requêtes envoyées par le serveur 3000 à l'entité électronique 1100 sont des requêtes d'authentification conformes à la norme ETSI 102.221.

En variante, les requêtes RQ1 à RQ4 peuvent être des messages courts SMS.

De façon optionnelle, ces messages courts SMS peuvent être sécurisés par des moyens cryptographiques.

### Troisième variante :

Dans le mode de réalisation décrit précédemment, l'invention est mise en oeuvre par l'entité électronique lorsqu'elle détecte un appel sortant (étape E5).

L'invention peut aussi être mise en oeuvre sur détection d'un appel entrant, notamment dans les applications dans lesquelles les appels entrants sont facturés.

Dans cette variante de réalisation, on peut prévoir des intervalles de temps, entre les requêtes d'authentification successives émises par le serveur, différents pour les appels entrants et sortants de sorte à appliquer une tarification distincte.

### Quatrième variante

Dans le mode de réalisation décrit précédemment, l'entité électronique répond positivement, en cours d'appel, à une requête lorsque le crédit de communication CC est suffisant pour utiliser les ressources du réseau pendant une durée déterminée en cours d'appel, cette durée pouvant avantageusement être choisie comme étant la durée séparant normalement deux requêtes d'authentification successives émises par le serveur 3000. Le crédit de communication est débité d'une durée correspondant à la durée non débitée jusqu'à la réception de la prochaine requête.

En variante, l'entité électronique peut répondre positivement, en cours d'appel, dès lors que le crédit de communication est positif, le crédit de communication étant crédité de la durée non débitée depuis la réception de la dernière requête.

## Revendications

1. Entité électronique (1100) comportant une mémoire sécurisée comportant un module pour gérer un crédit (CC) d'utilisation d'une ressource, **caractérisée en ce qu'**elle comporte :
- des moyens (COM) pour recevoir au moins requête (RQ1, RQ2, RQ3, RQ4) d'un type déterminé émise par un dispositif de contrôle (3000);
- des moyens pour déterminer, à partir de ladite au moins une requête (RQ1, RQ2, RQ3, RQ4), un état (HC, DC, CEC, FC) de la communication entre ladite entité électronique (1100) et ledit dispositif de contrôle (3000) ;
- des moyens sécurisés (AUTH) aptes à générer une réponse positive à une dite requête, lorsque ledit état de la communication est un état déterminé (DC, CEC), uniquement si ledit crédit (CC) est suffisant ; et
- des moyens (COM) de réponse aptes à envoyer ladite réponse positive audit dispositif de contrôle (3000).

2. Entité électronique selon la revendication 1, **caractérisée en ce que** lesdites requêtes dudit type déterminé sont les requêtes dont lesdites réponses sont utilisées par ledit dispositif de contrôle pour autoriser ou interdire l'accès à ladite ressource par ladite entité électronique ou par un terminal associé à ladite entité électronique.

3. Entité électronique selon la revendication 1 ou 2 **caractérisée**, en qu'elle comporte des moyens pour diminuer ledit crédit (CC), sur réception d'une dite requête (RQ1, RQ2, RQ3, RQ4), lorsqu'elle détecte que ladite communication est en cours (CEC).

4. Entité électronique selon l'une quelconque des revendications 1 à 3 **caractérisée en ce qu'**elle est constituée par une carte à microcircuit (1100) permettant à un terminal (1000) d'accéder à des ressources d'un réseau de télécommunications (2000) pour établir une communication dans ledit réseau, lorsque ladite carte (1100) répond positivement aux requêtes émises par un serveur dudit réseau (3000) gérant l'accès auxdites ressources.

5. Entité électronique selon la revendication 4, **caractérisé en ce que** lesdites ressources du réseau de télécommunication sont par exemple :
- les ressources réservées par ledit réseau pour établir une communication vocale, le dit crédit exprimant une durée de communication ; ou
- les ressources réservées par ledit réseau pour transporter un flux de données utilisateur, ledit crédit d'utilisation exprimant une durée ou un volume de données utilisateur.

6. Entité électronique selon la revendication 4 ou 5, **caractérisée en ce que**, ladite au moins une requête étant une requête d'authentification émise par ledit serveur (3000) gérant l'accès audit réseau (2000), ladite entité électronique (1100) comporte des moyens cryptographiques (AUTH) aptes à mettre en oeuvre un algorithme apte à générer une réponse d'authentification constituant ladite réponse positive, par exemple en utilisant une première clef cryptographique (K1) et l'algorithme « Run GSM Algorithm ».

7. Entité électronique selon l'une quelconque des revendications 1 à 6, **caractérisée en ce que** ledit module (MOD) est apte à diminuer ledit crédit (CC) dès réception de ladite requête.

8. Entité électronique selon l'une quelconque des revendications 1 à 7, **caractérisée en ce que** ladite entité électronique comporte des moyens pour détecter un état (HC, DC, CEC, FC) de ladite communication en analysant la durée entre la réception d'au moins deux dites requêtes successives.

9. Entité électronique selon l'une quelconque des revendications 1 à 8, **caractérisée en ce qu'**elle comporte des moyens pour interpréter un code compris dans ladite requête, ce code étant représentatif d'un état (DC, CEC, FC) de ladite communication.

10. Entité électronique selon la revendication 8, **caractérisée en ce qu'**elle comporte un compteur (TIM) apte à mesurer la durée entre la réception de deux dites requêtes successives, ledit compteur (TIM) étant un compte à rebours ; et **en ce que** ladite entité électronique (1000) comporte des moyens de réinitialisation (CTR) aptes, sur réception de ladite requête (RQ1, RQ2, RQ3), à réinitialiser ledit compte à rebours (TIM) avec une valeur supérieure à la durée attendue (D1) jusqu'à la réception de la prochaine dite requête.

11. Entité électronique selon l'une quelconque des revendications 8 à 10, **caractérisée en ce qu'**elle comporte des moyens pour détecter un début (DC) ou une fin (FC) de ladite communication sur réception de deux requêtes consécutives espacées d'une durée (D2, D3) différente d'un intervalle de temps déterminé (D1) correspondant à la durée entre deux dites requêtes successives lorsqu'une communication est en cours.

12. Dispositif de contrôle (3000) comportant des moyens (3001) pour autoriser ou interdire l'accès à une ressource par une entité électronique ou par un dispositif tiers (1000) associé à cette entité électronique, **caractérisé en ce qu'**il comporte :
- des moyens (3001) aptes à déterminer un état (HC, DC, CEC, FC) de la communication entre ladite entité électronique (1100) et ledit dispositif de contrôle (3000) ;
- des moyens (3004) d'envoi aptes à envoyer au moins requête (RQ1, RQ2, RQ3, RQ4) d'un type déterminé à ladite entité électronique, ladite au moins une requête étant représentative dudit état de la communication (HC, DC, CEC, FC) ; et
- des moyens de contrôle (3001) aptes à autoriser l'accès à ladite ressource par ladite entité électronique (1100) ou par un dispositif tiers (1000) associé à cette entité (1100) uniquement en cas de réception d'une réponse positive à ladite requête.

13. Dispositif de contrôle selon la revendication 12, **caractérisé en ce que** :
- ledit dispositif de contrôle (3000) est un serveur gérant l'accès aux ressources d'un réseau de télécommunications (2000) ;
- lesdits moyens d'envoi (3004) sont aptes à envoyer régulièrement, pendant toute la durée d'une communication, des dites requêtes d'authentification à une carte à microcircuit (1100) permettant à un terminal (1000) d'accéder à des ressources dudit réseau (2000) pour ladite communication ; et **en ce que** :
- lesdits moyens de contrôle sont aptes à interdire l'accès auxdites ressources par ledit terminal en cas d'échec d'une dite authentification.

14. Dispositif de contrôle selon la revendication 12 ou 13, **caractérisé en ce que** lesdits moyens d'envoi sont aptes à envoyer régulièrement ladite requête d'authentification (RQ1) selon un intervalle de temps déterminé (D1) entre le début (DC) et la fin (FC) de ladite communication.

15. Dispositif de contrôle selon l'une quelconque des revendications 12 à 14, **caractérisé en ce que** lesdits moyens d'envoi (3004) sont aptes à envoyer une dite requête d'authentification (RQ2) juste après le début de ladite communication (DC).

16. Dispositif de contrôle selon l'une quelconque des revendications 12 à 15, **caractérisé en ce que** lesdits moyens d'envoi (3004) sont aptes à envoyer une dite requête d'authentification (RQ4) juste après la fin de ladite communication (FC).

17. Dispositif de contrôle selon l'une quelconque des revendications 12 à 16 **caractérisé en ce qu'**il n'autorise l'accès à ladite ressource par le dispositif tiers que lorsqu'il reçoit une réponse positive à ladite requête dans une durée inférieure à une valeur déterminée.

18. Dispositif de contrôle selon l'une quelconque des revendications 12 à 17 **caractérisé en ce qu'**il comporte des moyens pour insérer dans ladite requête un code représentatif d'un état (DC, CEC, FC) de ladite communication.

19. Procédé d'accès à une ressource pouvant être mis en oeuvre par une entité électronique (1100) comportant une mémoire sécurisée comportant un module pour gérer un crédit (CC) d'utilisation de ladite ressource, ce procédé étant **caractérisé en ce qu'**il comporte :
- une étape (E10, E40) de réception d'au moins une requête (RQ1, RQ2, RQ3, RQ4) d'un type déterminé émise par un dispositif de contrôle (3000);
- une étape (E20, E50, E55) pour déterminer, à partir de ladite au moins une requête (RQ1, RQ2, RQ3, RQ4), un état (HC, DC, CEC, FC) de la communication entre ladite entité électronique (1100) et ledit dispositif de contrôle (3000) ;
- une étape (E32) de génération d'une réponse positive à une dite requête, par des moyens sécurisés de ladite entité (1100), lorsque ledit état de la communication est un état déterminé (DC, CEC), uniquement si ledit crédit (CC) est suffisant ; et
- une étape (E35) d'envoi de ladite réponse positive audit dispositif de contrôle (3000).

20. Programme d'ordinateur (PG-CS) comportant des instructions pour l'exécution des étapes du procédé d'accès à une ressource selon la revendication 19 lorsque ledit programme est exécuté par un ordinateur (CS).

21. Support d'enregistrement (1103) lisible par un ordinateur sur lequel est enregistré un programme d'ordinateur (PG-CS) comprenant des instructions pour l'exécution des étapes du procédé d'accès à une ressource selon la revendication 19.

22. Procédé pouvant être mis en oeuvre par un dispositif de contrôle (3000) pour contrôler l'accès à une ressource par une entité électronique (1100) ou par un dispositif tiers (1000) associé à cette entité (1100), **caractérisé en ce qu'**il comporte :
- une étape (F10, F40) pour déterminer un état (HC, DC, CEC, FC) de la communication entre ladite entité électronique (1100) et ledit dispositif de contrôle (3000) ;
- l'envoi (F15, F30, F55) d'au moins une requête (RQ1, RQ2, RQ3) d'un type déterminé à ladite entité électronique (1100), ladite au moins une requête étant représentative dudit état (HC, DC, CEC, FC) de la communication ; et
- une étape (ACC_AUT) pour autoriser l'accès à ladite ressource par ladite entité électronique ou par ledit dispositif tiers uniquement en cas de réception (F35) d'une réponse positive à ladite requête.

23. Programme d'ordinateur (PG-SRV) comportant des instructions pour l'exécution des étapes du procédé de contrôle d'accès à une ressource selon la revendication 22 lorsque ledit programme est exécuté par un ordinateur (3000).

24. Support d'enregistrement (3003) lisible par un ordinateur sur lequel est enregistré un programme d'ordinateur (PG-SRV) comprenant des instructions pour l'exécution des étapes du procédé de contrôle d'accès à une ressource selon la revendication 22.

## Patentansprüche

1. Elektronische Einheit (1100), umfassend einen gesicherten Speicher mit einem Modul zum Verwalten eines Guthabens (CC) zur Nutzung einer Ressource, **dadurch gekennzeichnet, dass** sie umfasst:
- Mittel (COM) zum Empfangen wenigstens einer Anfrage (RQ1, RQ2, RQ3, RQ4) eines bestimmten Typs, die durch eine Kontrollvorrichtung (3000) gesendet wird,
- Mittel, um anhand der wenigstens einen Anfrage (RQ1, RQ2, RQ3, RQ4) einen Zustand (HC, DC, CEC, FC) der Verbindung zwischen der elektronischen Einheit (1100) und der Kontrollvorrichtung (3000) zu bestimmen,
- gesicherte Mittel (AUTH), die geeignet sind, eine positive Antwort auf eine genannte Anfrage zu generieren, wenn der Zustand der Verbindung ein bestimmter Zustand (DC, CEC) ist, lediglich falls das Guthaben (CC) ausreichend ist, und
- Antwortmittel (COM), die geeignet sind, die positive Antwort an die Kontrollvorrichtung (3000) zu senden.

2. Elektronische Einheit nach Anspruch 1, **dadurch gekennzeichnet, dass** die Anfragen des bestimmten Typs die Anfragen sind, deren Antworten durch die Kontrollvorrichtung verwendet werden, um den Zugriff auf die Ressource über die elektronische Einheit oder über ein der elektronischen Einheit zugeordnetes Endgerät zuzulassen oder zu untersagen.

3. Elektronische Einheit nach Anspruch 1 oder 2, **dadurch gekennzeichnet, dass** sie Mittel umfasst, um das Guthaben (CC) bei Empfang einer genannten Anfrage (RQ1, RQ2, RQ3, RQ4) zu reduzieren, wenn sie erfasst, dass die Verbindung in Gang ist (CEC).

4. Elektronische Einheit nach einem der Ansprüche 1 bis 3, **dadurch gekennzeichnet, dass** sie durch eine Mikrochipkarte (1100) gebildet ist, die einem Endgerät (1000) ermöglicht, auf Ressourcen eines Telekommunikationsnetzes (2000) zuzugreifen, um eine Verbindung in dem Netz herzustellen, wenn die Karte (1100) auf die Anfragen, welche durch einen den Zugriff auf die Ressourcen verwaltenden Server des Netzes (3000) gesendet werden, positiv antwortet.

5. Elektronische Einheit nach Anspruch 4, **dadurch gekennzeichnet, dass** die Ressourcen des Telekommunikationsnetzes beispielsweise sind:
die durch das Netz reservierten Ressourcen, um eine Sprechverbindung herzustellen, wobei das Guthaben eine Verbindungsdauer ausdrückt, oder
- die durch das Netz reservierten Ressourcen, um einen Nutzerdatenstrom zu übertragen, wobei das Nutzungsguthaben eine Dauer oder ein Nutzerdatenvolumen ausdrückt.

6. Elektronische Einheit nach Anspruch 4 oder 5, **dadurch gekennzeichnet, dass**, wenn die wenigstens eine Anfrage eine Authentifizierungsanfrage ist, die durch den den Zugang zu dem Netz (2000) verwaltenden Server (3000) gesendet wird, die elektronische Einheit (1100) kryptographische Mittel (AUTH) umfasst, die geeignet sind, einen Algorithmus auszuführen, welcher geeignet ist, eine die positive Antwort darstellende Authentifizierungsantwort zu generieren, beispielsweise unter Verwendung eines ersten kryptographischen Schlüssels (K1) und des Algorithmus "Run GSM Algorithm".

7. Elektronische Einheit nach einem der Ansprüche 1 bis 6, **dadurch gekennzeichnet, dass** das Modul (MOD) geeignet ist, das Guthaben (CC) ab Empfang der Anfrage zu reduzieren.

8. Elektronische Einheit nach einem der Ansprüche 1 bis 7, **dadurch gekennzeichnet, dass** die elektronische Einheit Mittel umfasst, um einen Zustand (HC, DC, CEC, FC) der Verbindung durch Analysieren der Dauer zwischen dem Empfang von wenigstens zwei aufeinanderfolgenden Anfragen zu erfassen.

9. Elektronische Einheit nach einem der Ansprüche 1 bis 8, **dadurch gekennzeichnet, dass** sie Mittel umfasst, um einen in der Anfrage enthaltenen Code zu interpretieren, wobei dieser Code für einen Zustand (DC, CEC, FC) der Verbindung repräsentativ ist.

10. Elektronische Einheit nach Anspruch 8, **dadurch gekennzeichnet, dass** sie einen Zähler (TIM) umfasst, der geeignet ist, die Dauer zwischen dem Empfang von zwei aufeinanderfolgenden Anfragen zu messen, wobei der Zähler (TIM) ein Rückwärtszähler ist, und dass die elektronische Einheit (1000) Reinitialisierungsmittel (CTR) umfasst, die geeignet sind, bei Empfang der Anfrage (RQ1, RQ2, RQ3) den Rückwärtszähler (TIM) mit einem höheren Wert als die erwartete Dauer (D1) bis zum Empfang der nächsten Anfrage zu reinitialisieren.

11. Elektronische Einheit nach einem der Ansprüche 8 bis 10, **dadurch gekennzeichnet, dass** sie Mittel umfasst, um einen Anfang (DC) oder ein Ende (FC) der Verbindung bei Empfang von zwei aufeinanderfolgenden Anfragen zu erfassen, die um eine Dauer (D2, D3) beabstandet sind, welche von einem bestimmten Zeitraum (D1), der der Dauer zwischen zwei aufeinanderfolgenden Anfragen entspricht, wenn eine Verbindung in Gang ist, verschieden ist.

12. Kontrollvorrichtung (3000), umfassend Mittel (3001), um den Zugriff auf eine Ressource durch eine elektronische Einheit oder durch eine Drittvorrichtung (1000), welche dieser elektronischen Einheit zugeordnet ist, zuzulassen oder zu untersagen, **dadurch gekennzeichnet, dass** sie umfasst:
- Mittel (3001), die geeignet sind, einen Zustand (HC, DC, CEC, FC) der Verbindung zwischen der elektronischen Einheit (1100) und der Kontrollvorrichtung (3000) zu bestimmen,
- Sendemittel (3004), die geeignet sind, wenigstens eine Anfrage (RQ1, RQ2, RQ3, RQ4) eines bestimmten Typs an die elektronische Einheit zu senden, wobei die wenigstens eine Anfrage für den Zustand der Verbindung (HC, DC, CEC, FC) repräsentativ ist, und
- Kontrollmittel (3001), die geeignet sind, den Zugriff auf die Ressource durch die elektronische Einheit (1100) oder durch eine Drittvorrichtung (1000), welche dieser Einheit (1100) zugeordnet ist, lediglich bei Empfang einer positiven Antwort auf die Anfrage zuzulassen.

13. Kontrollvorrichtung nach Anspruch 12, **dadurch gekennzeichnet, dass**:
- die Kontrollvorrichtung (3000) ein Server ist, der den Zugriff auf die Ressourcen eines Telekommunikationsnetzes (2000) verwaltet,
- die Sendemittel (3004) geeignet sind, während der gesamten Dauer einer Verbindung regelmäßig Authentifizierungsanfragen an eine Mikrochipkarte (1100) zu senden, die einem Endgerät (1000) ermöglicht, auf Ressourcen des Netzes (2000) für die Verbindung zuzugreifen, und dass:
- die Kontrollmittel geeignet sind, im Fall eines Misslingens einer Authentifizierung den Zugriff auf die Ressourcen durch das Endgerät zu untersagen.

14. Kontrollvorrichtung nach Anspruch 12 oder 13, **dadurch gekennzeichnet, dass** die Sendemittel geeignet sind, die Authentifizierungsanfrage (RQ1) entsprechend einem bestimmten Zeitraum (D1) zwischen dem Anfang (DC) und dem Ende (FC) der Verbindung regelmäßig zu senden.

15. Kontrollvorrichtung nach einem der Ansprüche 12 bis 14, **dadurch gekennzeichnet, dass** die Sendemittel (3004) geeignet sind, eine Authentifizierungsanfrage (RQ2) genau nach dem Anfang (DC) der Verbindung zu senden.

16. Kontrollvorrichtung nach einem der Ansprüche 12 bis 15, **dadurch gekennzeichnet, dass** die Sendemittel (3004) geeignet sind, eine Authentifizierungsanfrage (RQ4) genau nach dem Ende (FC) der Verbindung zu senden.

17. Kontrollvorrichtung nach einem der Ansprüche 12 bis 16, **dadurch gekennzeichnet, dass** sie den Zugriff auf die Ressource durch die Drittvorrichtung nur zulässt, wenn sie innerhalb einer Zeitdauer, die kürzer als ein bestimmter Wert ist, eine positive Antwort auf die Anfrage erhält.

18. Kontrollvorrichtung nach einem der Ansprüche 12 bis 17, **dadurch gekennzeichnet, dass** sie Mittel umfasst, um in die Anfrage einen Code einzufügen, der für einen Zustand (DC, CEC, FC) der Verbindung repräsentativ ist.

19. Verfahren für den Zugriff auf eine Ressource, das durch eine elektronische Einheit (1100), umfassend einen gesicherten Speicher mit einem Modul zum Verwalten eines Guthabens (CC) zur Nutzung der Ressource, durchgeführt werden kann, wobei dieses Verfahren **dadurch gekennzeichnet ist, dass** es umfasst:
- einen Schritt (E10, E40) zum Empfangen wenigstens einer Anfrage (RQ1, RQ2, RQ3, RQ4) eines bestimmten Typs, die durch eine Kontrollvorrichtung (3000) gesendet wird,
- einen Schritt (E20, E50, E55), um anhand der wenigstens einen Anfrage (RQ1, RQ2, RQ3, RQ4) einen Zustand (HC, DC, CEC, FC) der Verbindung zwischen der elektronischen Einheit (1100) und der Kontrollvorrichtung (3000) zu bestimmen,
- einen Schritt (E32) zum Generieren einer positiven Antwort auf eine genannte Anfrage durch gesicherte Mittel der Einheit (1100), wenn der Zustand der Verbindung ein bestimmter Zustand (DC, CEC) ist, lediglich falls das Guthaben (CC) ausreichend ist, und
- einen Schritt (E35) zum Senden der positiven Antwort an die Kontrollvorrichtung (3000).

20. Computerprogramm (PG-CS), umfassend Befehle für die Durchführung der Schritte des Verfahrens für den Zugriff auf eine Ressource nach Anspruch 19, wenn das Programm durch einen Computer (CS) ausgeführt wird.

21. Durch einen Computer lesbarer Aufzeichnungsträger (1103), auf dem ein Computerprogramm (PG-CS) gespeichert ist, das Befehle für die Durchführung der Schritte des Verfahrens für den Zugriff auf eine Ressource nach Anspruch 19 umfasst.

22. Verfahren, dass durch eine Kontrollvorrichtung (3000) durchgeführt werden kann, um den Zugriff auf eine Ressource durch eine elektronische Einheit (1100) oder durch eine Drittvorrichtung (1000), welche dieser Einheit (1100) zugeordnet ist, zu kontrollieren, **dadurch gekennzeichnet, dass** es umfasst:
- einen Schritt (F10, F40), um einen Zustand (HC, DC, CEC, FC) der Verbindung zwischen der elektronischen Einheit (1100) und der Kontrollvorrichtung (3000) zu bestimmen,
- das Senden (F15, F30, F55) wenigstens einer Anfrage (RQ1, RQ2, RQ3) eines bestimmten Typs an die elektronische Einheit (1100), wobei die wenigstens eine Anfrage für den Zustand (HC, DC, CEC, FC) der Verbindung repräsentativ ist, und
- einen Schritt (ACC_AUT), um den Zugriff auf die Ressource durch die elektronische Einheit oder durch die Drittvorrichtung lediglich bei Empfang (F35) einer positiven Antwort auf die Anfrage zuzulassen.

23. Computerprogramm (PG-SRV), umfassend Befehle für die Durchführung der Schritte des Verfahrens zur Kontrolle des Zugriffs auf eine Ressource nach Anspruch 22, wenn das Programm durch einen Computer (3000) ausgeführt wird.

24. Durch einen Computer lesbarer Aufzeichnungsträger (3003), auf dem ein Computerprogramm (PG-SRV) gespeichert ist, das Befehle für die Durchführung der Schritte des Verfahrens zur Kontrolle des Zugriffs auf eine Ressource nach Anspruch 22 umfasst.

## Claims

1. An electronic entity (1100) comprising a secure memory having a module to manage credit (CC) for use of a resource, **characterized in that** it comprises:
- means (COM) for receiving at least one request (RQ1, RQ2, RQ3, RQ4) of a determined type transmitted by a control device (3000);
- means for determining, from said at least one request (RQ1, RQ2, RQ3, RQ4), a state (HC, DC, CEC, FC) of the communication between said electronic entity (1100) and said control device (3000);
- secure means (AUTH) capable of generating a positive response to said request, when said communication state is a determined state (DC, CEC), only if said credit (CC) is sufficient; and
- response means (COM) capable of sending said positive response to said control device (3000).

2. The electronic entity according to claim 1, **characterized in that** said requests of said determined type are the requests for which said responses are used by said control device to authorize or refuse access to said resource by said electronic entity or by a terminal associated with said electronic entity.

3. The electronic entity according to claim 1 or 2, **characterized in that** it comprises means for decreasing said credit (CC) on receipt of said request (RQ1, RQ2, RQ3, RQ4), when it detects that said communication is in progress (CEC).

4. The electronic entity according to any one of claims 1 to 3, **characterized in that** it consists of a microcircuit card (1100) enabling a terminal (1000) to access resources of a telecommunications network (2000) to set up a communication over said network, when said card (1100) responds positively to the requests transmitted by a server of said network (3000) managing access to said resources.

5. The electronic entity according to claim 4, **characterized in that** said resources of the telecommunication network are for example:
- resources reserved by said network to set up a vocal communication, said credit expressing a communication time; or
- the resources reserved by said network to convey a flow of user data, said credit for use expressing a duration or volume of user data.

6. The electronic entity according to claim 4 or 5, **characterized in that** said at least one request being an authentication request transmitted by said server (3000) managing access to said network (2000), said electronic entity (1100) comprises cryptographic means (AUTH) capable of implementing an algorithm able to generate an authentication response forming said positive response, for example using a first cryptographic key (K1) and the algorithm "Run GSM Algorithm".

7. The electronic entity according to any one of claims 1 to 6, **characterized in that** said module (MOD) is capable of decreasing said credit (CC) on receipt of said request.

8. The electronic entity according to any one of claims 1 to 7, **characterized in that** said electronic entity comprises means for detecting a state (HC, DC, CEC, FC) of said communication by analyzing the time between receipt of at least two said successive requests.

9. The electronic entity according to any one of claims 1 to 8, **characterized in that** it comprises means for interpreting a code included in said request, this code being representative of a state (DC, CEC, FC) of said communication.

10. The electronic entity according to claim 8, **characterized in that** it comprises a timer (TIM) capable of measuring the time between receipt of two said successive requests, said timer (TIM) being a countdown timer; and **in that** said electronic entity (1000) comprises resetting means (CTR) capable, on receipt of said request (RQ1, RQ2, RQ3), of resetting said countdown counter (TIM) with a value higher than the expected time (D1) until the receipt of the following said request.

11. The electronic entity according to any one of claims 8 to 10, **characterized in that** it comprises means to detect a start (DC) or finish (FC) of said communication on receipt of two consecutive requests spaced apart by a time (D2, D3) differing from a determined interval of time (D1) corresponding to the time between two said successive requests when a communication is in progress.

12. A control device (3000) comprising means (3001) to authorize or refuse access to a resource by an electronic entity or by a third-party device (1000) associated with this electronic entity, **characterized in that** it comprises:
- means (3001) capable of determining a state (HC, DC, CEC, FC) of the communication between said electronic entity (1100) and said control device (3000);
- send means (3004) capable of sending at least one request (RQ1, RQ2, RQ3, RQ4) of a predetermined type to said electronic entity, said at least one request being representative of said state (HC, DC, CEC, FC) of the communication; and
- control means (3001) capable of authorizing access to said resource by said electronic entity (1100) or by a third-party device (1000) associated with this entity (1100) only in the event of receipt of a positive response to said request.

13. The control device according to claim 12, **characterized in that**:
- said control device (3000) is a server managing access to the resources of a telecommunications network (2000);
- said send means (3004) are capable, throughout the entire duration of a communication, of regularly sending said authentication requests to a microcircuit card (1100) enabling a terminal (1000) to access resources of said network (2000) for said communication; and **in that**:
- said control means are capable of refusing access to said resources by said terminal in the event of failure of said authentication.

14. The control device according to claim 12 or 13, **characterized in that** said send means are capable of regularly sending said authentication request (RQ1) at a determined interval of time (D1) between the start (DC) and finish (FC) of said communication.

15. The control device according to any one of claims 12 to 14, **characterized in that** said send means (3004) are capable of sending said authentication request (RQ2) just after the start of said communication (DC).

16. The control device according to any one of claims 12 to 15, **characterized in that** said send means (3004) are capable of sending said authentication request (RQ4) just after the finish of said communication (FC).

17. The control device according to any one of claims 12 to 16, **characterized in that** it only authorizes access to said resource by the third-party device when it receives a positive response to said request within a time shorter than a determined value.

18. The control device according to any one of claims 12 to 17, **characterized in that** it comprises means for inserting in said request a code representative of a state (DC, CEC, FC) of said communication.

19. A method for accessing a resource able to be implemented by an electronic entity (1100) comprising a secure memory having a module to manage credit (CC) for use of said resource, this method being **characterized in that** it comprises:
- a step (E10, E40) to receive at least one request (RQ1, RQ2, RQ3, RQ4) of a determined type transmitted by a control device (3000);
- a step (E20, E50, E55) to determine, from said at least one request (RQ1, RQ2, RQ3, RQ4), a state (HC, DC, CEC, FC) of the communication between said electronic entity (1100) and said control device (3000);
- a step (E32) to generate a positive response to said request, by secure means of said entity (1100), when said state of communication is a determined state (DC, CEC), only if said credit (CC) is sufficient; and
- a step (E35) to send said positive response to said control device (3000).

20. A computer program (PG-CS) comprising instructions to execute the steps of the method for accessing a resource according to claim 19, when said program is executed by a computer (CS).

21. A recording medium (1103) readable by a computer on which a computer program (PG-CS) is recorded comprising instructions for execution of the steps of the method for accessing a resource according to claim 19.

22. A method able to be implemented by a control device (3000) to control access to a resource by an electronic entity (1100) or by a third-party device (1000) associated with this entity (1100), **characterized in that** it comprises:
- a step (F10, F40) to determine a state (HC, DC, CEC, FC) of the communication between said electronic entity (1100) and said control device (3000);
- the sending (F15, F30, F55) of at least one request (RQ1, RQ2, RQ3) of a determined type to said electronic entity (1100), said at least one request representative of said state (HC, DC, CEC, FC) of the communication; and
- a step (ACC_AUT) to authorize access to said resource by said electronic entity or by said third-party device only in the event of receipt (F35) of a positive response to said request.

23. A computer program (PG-SRV) comprising instructions for execution of the steps of the method for controlling access to a resource according to claim 22, when said program is executed by a computer (3000).

24. A recording medium (3003) readable by a computer on which a computer program (PG-SRV) is recorded comprising instructions for execution of the steps of the method for controlling access to a resource according to claim 22.
